# EUROPEAN PATENT APPLICATION

(11) **EP 4 675 548 A1**
(43) Date of publication of application: **07.01.2026**
(21) Application number: 25185712.4
(22) Date of filing: 26.06.2025
(51) Int. Cl.: G06T 3/4038

(54) **METHOD AND APPARATUS FOR SIDE AND REAR VIEW IMAGE STITCHING IN CAMERA MONITOR SYSTEM OF A VEHICLE**

(30) Priority: 01.07.2024 US 202418760401
(71) Applicant: Stoneridge Electronics AB, 16903 Solna (SE)
(72) Inventor: WANG, Song, Novi, 48377 (US); SHARMA, Utkarsh, Farmington Hills, 48334 (US); MA, Liang, Rochester, 48306 (US); COOPRIDER, Troy, White Lake, 48386 (US)
(74) Representative: Marks & Clerk LLP

(57) **Abstract**

A method for a camera monitor system (CMS) includes obtaining a first image from a first camera that depicts a first area that extends along a first side of a commercial vehicle; obtaining a second image from a second camera that depicts a second area that extends along a second side, opposite the first side, of the commercial vehicle; obtaining a third image from a third camera that depicts a rear area behind the commercial vehicle; performing a perspective transformation on the first image, the second image, and the third image to obtain an updated image set, such that each of the first image, second image, and third image are updated in the updated image set; and stitching the images of the updated image set together to form a combined image in which the third image is disposed between the first image and second image, and in which the first area, second area, and rear area are each depicted. A CMS is also disclosed.

## Description

### TECHNICAL FIELD

This disclosure relates to a camera monitor system (CMS), and more particularly to a method and apparatus for providing image stitching in a CMS.

### BACKGROUND

Vehicle camera systems for mirror replacement or for supplementing mirror views are utilized in commercial vehicles to enhance the ability of a vehicle operator to see a surrounding environment of the commercial vehicle. Camera monitor systems (CMS) utilize one or more cameras to provide an enhanced field of view to a vehicle operator. In some examples, the mirror replacement systems cover a larger field of view than a conventional mirror, or include views that are not fully obtainable via a conventional mirror. When images are provided to a vehicle occupant from multiple cameras, it may be difficult for the driver to efficiently analyze the images.

### SUMMARY

A method for a camera monitor system (CMS) according to an example embodiment of the present disclosure includes obtaining a first image from a first camera that depicts a first area that extends along a first side of a commercial vehicle; obtaining a second image from a second camera that depicts a second area that extends along a second side, opposite the first side, of the commercial vehicle; obtaining a third image from a third camera that depicts a rear area behind the commercial vehicle; performing a perspective transformation on the first image, the second image, and the third image to obtain an updated image set, such that each of the first image, second image, and third image are updated in the updated image set; and stitching the images of the updated image set together to form a combined image in which the third image is disposed between the first image and second image, and in which the first area, second area, and rear area are each depicted.

In a further embodiment of the foregoing embodiment, a field of view of the third camera overlaps a field of view of the first camera and a field of view of the second camera.

In a further embodiment of any of the foregoing embodiments, the third image includes a left portion that extends along a left edge of the third image and a right portion that extends along a right edge of the third image. The stitching is performed such that in the combined image, the left portion of the third image is stitched to a middle portion of the second image, and the right portion of the third image is stitched to a middle portion of the first image.

In a further embodiment of any of the foregoing embodiments, the first camera, second camera, and third camera have respective optical axes that intersect a ground plane at respective optical angles. The optical angle of the third camera is less than 90° and is greater than the respective optical angles of the first camera and the second camera.

In a further embodiment of any of the foregoing embodiments, the first camera is mounted to a cab of the commercial vehicle on the first side, the second camera is mounted to the cab on the second side of the commercial vehicle, and the third camera is mounted to a trailer of the commercial vehicle.

In a further embodiment of any of the foregoing embodiments, the first camera, the second camera, and the third camera have respective focal lengths. The focal length of the third camera is less than the respective focal lengths of the first camera and the second camera.

In a further embodiment of any of the foregoing embodiments, the method includes, prior to performing the perspective transformation, performing at least one of: distortion correction for the first image from the first camera to mitigate image distortion caused by a lens or sensor of the first camera, distortion correction for the second image from the second camera to mitigate image distortion caused by a lens or sensor of the second camera, and distortion correction for the third image from the third camera to mitigate image distortion caused by a lens or sensor of the third camera.

In a further embodiment of any of the foregoing embodiments, the method includes, prior to the stitching, cropping at least one of the first image, the second image, and the third image.

In a further embodiment of any of the foregoing embodiments, the stitching the images of the updated image set together to form a combined image includes performing a first mapping of a first plurality of points of the third image in the updated image set to the first image in the updated image set; performing a second mapping of a second plurality of points of the third image in the updated image set to the second image in the updated image set; and, based on the first mapping and second mapping, aligning the first image, second image, and third image in the updated image set; and blending the first image in the updated image set, the second image in the updated image set, and the third image in the updated image set to obtain the combined image.

In a further embodiment of any of the foregoing embodiments, the method includes displaying the first image on a first electronic display in the commercial vehicle, displaying the second image on a second electronic display in the commercial vehicle, and displaying the combined image on a third electronic display in the commercial vehicle that is disposed between the first electronic display and the second electronic display.

A camera monitor system (CMS) according to an example embodiment of the present disclosure includes a first camera, a second camera, and a third camera mounted to different locations of a commercial vehicle. The camera monitor system also includes processing circuitry operatively connected to memory and configured to obtain a first image from the first camera that depicts a first area that extends along a first side of the commercial vehicle; obtain a second image from the second camera that depicts a second area that extends along a second side, opposite the first side, of the commercial vehicle; obtain a third image from the third camera that depicts a rear area behind the commercial vehicle; perform a perspective transformation on the first image, the second image, and the third image to obtain an updated image set, such that each of the first image, second image, and third image are updated in the updated image set; and stitch the images of the updated image set together to form a combined image in which the third image is disposed between the first and second images, and in which the first area, second area, and rear area are each depicted.

In a further embodiment of the foregoing embodiment, a field of view of the third camera overlaps a field of view of the first camera and a field of view of the second camera.

In a further embodiment of any of the foregoing embodiments, the third image includes a left portion that extends along a left edge of the third image and a right portion that extends along a right edge of the third image. In the combined image, the left portion of the third image is stitched to a middle portion of the second image, and the right portion of the third image is stitched to a middle portion of the first image.

In a further embodiment of any of the foregoing embodiments, the first camera, second camera, and third camera have respective optical axes that intersect a ground plane at respective optical angles. The optical angle of the third camera is less than 90° and is greater than the respective optical angles of the first camera and the second camera.

In a further embodiment of any of the foregoing embodiments, the first camera and second camera are mounted to a cab of the commercial vehicle, and the third camera is mounted to a trailer of the commercial vehicle.

In a further embodiment of any of the foregoing embodiments, the first camera, the second camera, and the third camera have respective focal lengths, and the focal length of the third camera is less than the respective focal lengths of the first camera and the second camera.

In a further embodiment of any of the foregoing embodiments, the processing circuitry is configured to, prior to performance of the perspective transformation, perform at least one of: distortion correction for the first image from the first camera to mitigate image distortion caused by a lens or sensor of the first camera; distortion correction for the second image from the second camera to mitigate image distortion caused by a lens or sensor of the second camera; and distortion correction for the third image from the third camera to mitigate image distortion caused by a lens or sensor of the third camera.

In a further embodiment of any of the foregoing embodiments, the processing circuitry is configured to, prior to the stitching, crop at least one of the first image, the second image, and the third image.

In a further embodiment of any of the foregoing embodiments, to stitch the images of the updated image set, the processing circuitry is configured to perform a first mapping of a first plurality of points of the third image in the updated image set to the first image in the updated image set; perform a second mapping of a second plurality of points of the third image in the updated image set to the second image in the updated image set; and, based on the first mapping and second mapping, align the first image, second image, and third image in the updated image set; and blend the first, second, and third images in the updated image set to obtain the combined image.

In a further embodiment of any of the foregoing embodiments, the processing circuitry is configured to display the first image on a first electronic display in the commercial vehicle, display the second image on a second electronic display in the commercial vehicle, and display the combined image on a third electronic display in the commercial vehicle that is disposed between the first electronic display and the second electronic display.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

The disclosure can be further understood by reference to the following detailed description when considered in connection with the accompanying drawings wherein:
Figure 1 is a schematic front view of a commercial vehicle with a camera monitor system (CMS) used to provide at least Class II and Class IV views.
Figure 2 is a schematic birds-eye view of the commercial vehicle of Figure 1 with a CMS providing Class II, Class IV, Class V, Class VI, and Class VIII views.
Figure 3 is a schematic top view of an example vehicle cabin interior.
Figure 4 is a perspective view of the vehicle cabin interior of Figure 3.
Figure 5 is a schematic view of the commercial vehicle of Figure 1 and two associated optical angles of CMS cameras.
Figure 6A is an example image from a first CMS camera.
Figure 6B is an example image from a second CMS camera.
Figure 6C is an example image from a third CMS camera.
Figure 7A is an example of the image of Figure 6A after perspective transformation.
Figure 7B is an example of the image of Figure 6B after perspective transformation.
Figure 7C is an example of the image of Figure 6C after perspective transformation.
Figure 8 is a combination of the images of Figures 7A-C.
Figure 9 is a flowchart of an example method for a CMS.

### DETAILED DESCRIPTION

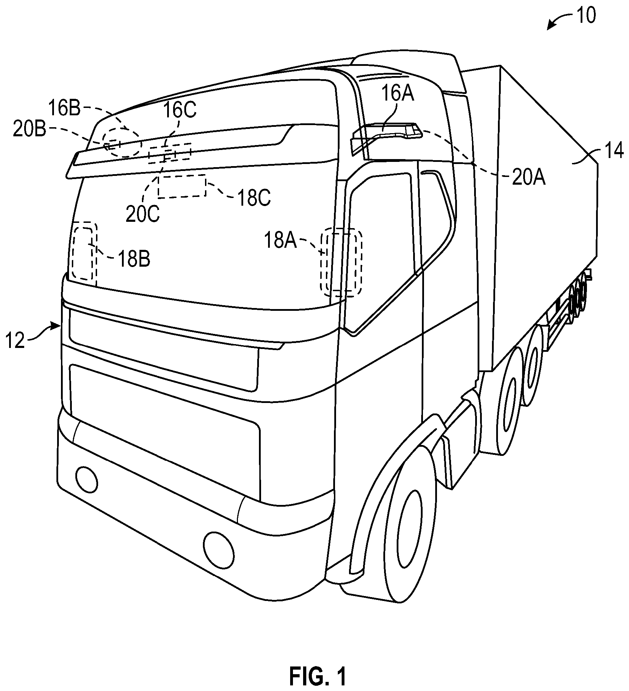

Schematic views of a commercial vehicle 10 are illustrated in Figures 1-4. The commercial vehicle 10 includes a vehicle cab or "tractor" 12 for pulling a trailer 14, where the trailer 14 pivots with respect to the tractor 12 during turns. Although the commercial vehicle 10 is depicted as a commercial truck with a single trailer in this disclosure, it is understood that other commercial vehicle configurations may be used (e.g., different types or quantities of trailers).

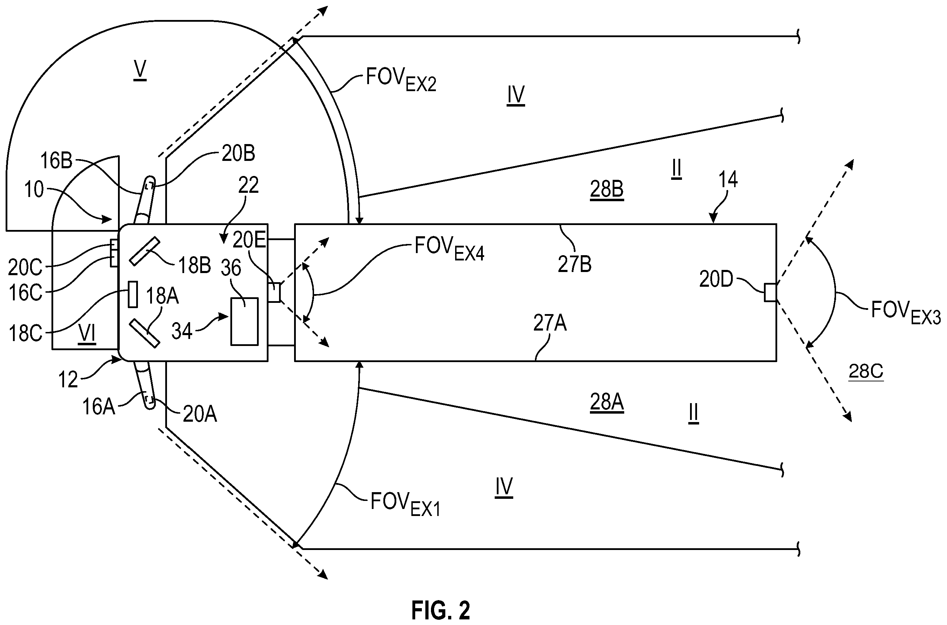

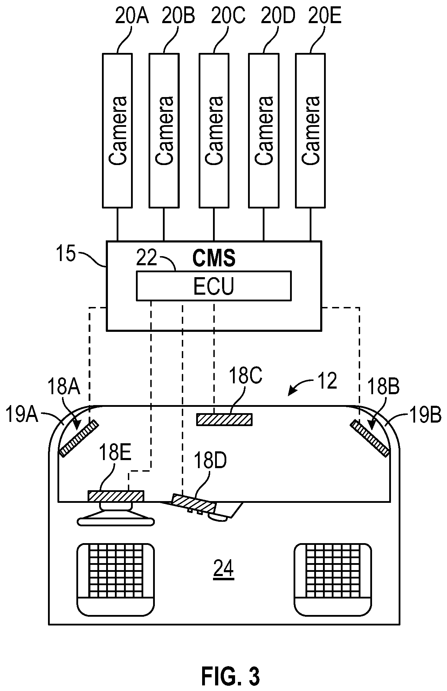

A pair of camera arms 16A-B include a respective base that is secured to, for example, the tractor 12. A pivoting arm is supported by the base and may articulate relative thereto. At least one rearward facing camera 20A-B is arranged respectively on or within the camera arms 16A-B. The cameras 20A-B are "rearward facing" in that they face towards a rear of the commercial vehicle 10. The exterior cameras 20A-B respectively provide an exterior field of view FOV_{EX1}, FOV_{EX2} that each include at least one of Class II and Class IV views (Fig. 2), which are legally prescribed views in the commercial trucking industry. The cameras 20A-B are part of a camera monitor system (CMS) 15 (see Figure 3).

As shown in Figure 2, camera 20A provides a view of a first area 28A that extends along a first side 27A of the commercial vehicle 10 and is included in the Class II and Class IV views for the camera 20A. Also, camera 20B provides a view of a second area 28B that extends along a second side 27B of the commercial vehicle 10 and is included in the Class II and Class IV views for the camera 20B.

The Class II view on a given side of the commercial vehicle 10 is a subset of the class IV view of the same side of the commercial vehicle 10. Multiple cameras also may be used in each camera arm 16A-B to provide these views, if desired. Class II (narrow) and Class IV (wide angle) views are defined in European R46 legislation, for example, and the United States and other countries have similar drive visibility requirements for commercial trucks. Any reference to a "Class" view is not intended to be limiting, but rather is intended as an example of the type of view provided to a display from a particular camera.

Each camera arm 16A-16B may also provide a housing that encloses electronics, e.g., a controller, that are configured to provide various features of the CMS 15. The camera arms 16A-B may be mounted either at a roof-mount location over the cab door (as shown), or on a door-mounted bracket or station, for example.

If video of Class V and/or Class VI views is also desired, a camera housing 16C and camera 20C may be arranged at or near the front of the commercial vehicle 10 to provide those views (Figure 2).

A backup camera 20D provides a field of view FOV_{EX3} of rear area 28C behind the commercial vehicle 10, which overlaps the fields of view FOV_{EX1}, FOV_{EX2}. The backup camera 20D may be mounted at a top/centerline of the trailer, at a bumper/bed level of the trailer, or at a top-corner of the back of the trailer, for example. Thus, in the example of Figures 1-2, camera 20A is mounted to the cab 12 of the commercial vehicle 10 on the first side 27A, camera 20B is mounted to the cab 12 of the commercial vehicle 10 on the second side 27B, and camera 20D is mounted to a rear of the trailer 14 of the commercial vehicle.

Alternatively, or in addition to the rear trailer camera, a "fifth wheel camera" 20E may be provided that is mounted to a rear of the tractor 12 and that provides a field of view FOV_{EX4} which, when the trailer 14 is disconnected from the cab 12, also overlaps the fields of view FOV_{EX1}, FOV_{EX2}. The fifth wheel camera 20E may be mounted anywhere between the lateral plane of the fifth wheel fixture and the top/roof edge of the tractor, for example.

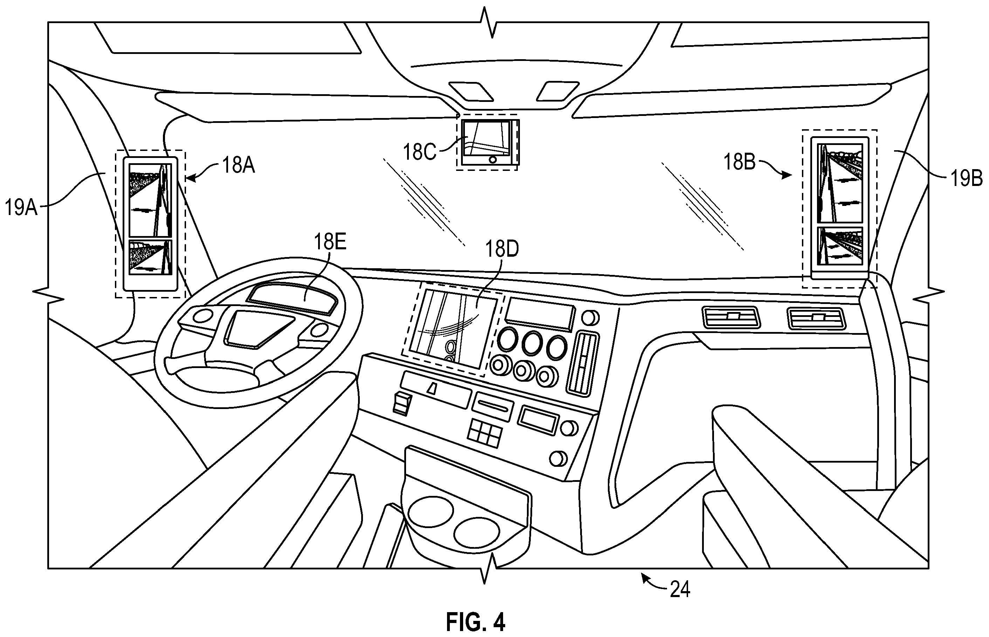

Figure 3 is a schematic top view of an example vehicle cabin interior 24, and Figure 4 is a perspective view of the vehicle cabin interior 24. Referring now to Figures 3-4 with continued reference to Figures 1-2, electronic displays 18A-E (e.g., which may be video displays, such as LCD displays) and cameras 20A-E are shown. The various electronic displays 18A-E and cameras 20A-E are part of the CMS 15, and therefore act as CMS displays and CMS cameras. As used herein, a "CMS camera" 20 is a camera configured to record images of an environment surrounding a commercial vehicle 10, and a "CMS display" 18 is an electronic display (e.g., an LCD) that is configured to image feeds from those cameras.

The CMS 15 includes a CMS electronic control unit (ECU) 22 that acts as a controller and includes processing circuitry that supports operation of the CMS 15. The CMS ECU 22 is operatively connected to memory (which may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). The processing circuitry may include one or more microprocessors, microcontrollers, application specific integrated circuits (ASICs), or the like.

The CMS displays 18A-B are arranged on each of the driver and passenger sides within the vehicle cab 12 on or near the A-pillars 19A-B to display Class II and Class IV views on its respective side of the commercial vehicle 10, which provide rearward facing side views along the commercial vehicle 10 that are captured by the exterior cameras 20A-B.

As discussed above, if video of Class V and Class VI views are also desired, the camera housing 16C and camera 20C may be arranged at or near the front of the commercial vehicle 10 to provide those views (Figure 2). In the example of Figure 3, additional displays 18C-E are provided. Display 18C is arranged in the vehicle cabin interior 24 near the top center of the windshield and may be used to display the Class V and Class VI views, which are toward the front of the commercial vehicle 10, or a backup camera view (from camera 20D or 20E) to the driver. Display 18D is provided in a center console area of the vehicle cabin interior 24, and may be used as a backup display or for other purposes, such as navigation, infotainment, etc. Display 18E may be part of an instrument cluster, for example, and may be used as a backup display.

If desired, the camera arms 16A-B may include conventional mirrors integrated with them as well, although the CMS 15 may be used to entirely replace mirrors. In additional examples, each side can include multiple camera arms, with each arm housing one or more cameras and/or mirrors.

As will be discussed in greater detail below, the CMS ECU 22 is configured to perform image stitching to combine a view of CMS camera 20A ("first camera"), CMS camera 20B ("second camera"), and CMS camera 20D or 20E ("third camera"). Although use of camera 20E is an option for the third camera, the embodiments discussed below will focus on the camera 20D.

In the examples discussed below, the cameras 20A, 20B, and 20D have respective focal lengths, and the focal length of camera 20D is less than the respective focal lengths of the CMS cameras 20A-B, thereby giving the camera 20D a wider angle field of view than the cameras 20A, 20B. In one or more embodiments, CMS cameras 20A-B have the same focal length.

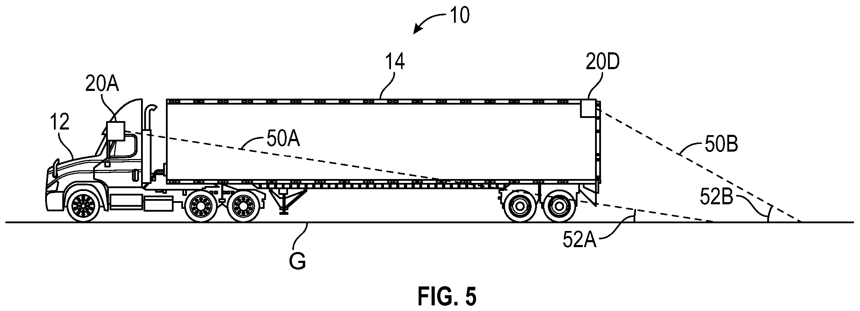

Figure 5 is a schematic view of the commercial vehicle 10 and two associated optical angles 52A, 52B that are each less than 90°. As shown, CMS camera 20A has a first optical axis 50A, and CMS camera 20D has a second optical axis 50B. The optical angle 52A is formed between an intersection of optical axis 50A of camera 20A and a ground plane G. The optical angle 52B is formed between an intersection of optical axis 50B of CMS camera 20D and the ground plane G. As shown in Figure 5, the optical angle 52A is less than the optical angle 52B.

As discussed in more detail below, the CMS ECU 22 performs image stitching of images from the camera 20A, 20B, and 20D (or 20E) to produce a combined image that allows a vehicle occupant to have a panoramic view of the areas 28A-C, and effectively see through the trailer 14.

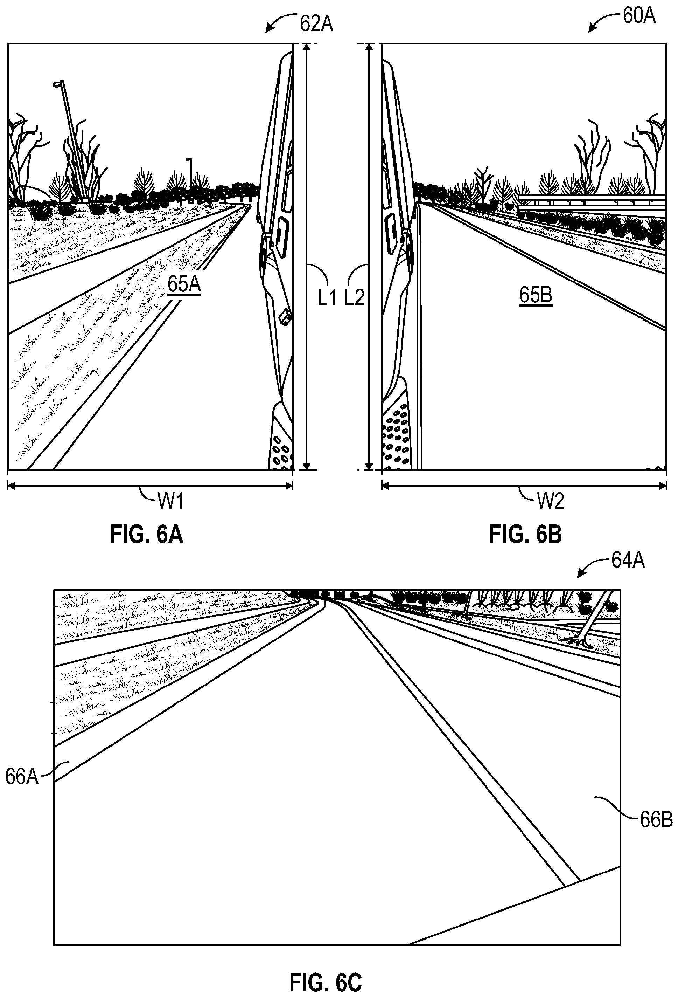

Figure 6A is an example second image 62A from the camera 20B, which depicts area 28B that extends along side 27B of the commercial vehicle 10, prior to correction or perspective transformation.

Figure 6B is an example first image 60A from the camera 20A, which depicts area 28A that extends along side 27A that is opposite side 27B of the commercial vehicle 10, that depicts an area behind the commercial vehicle.

Figure 6C is an example third image 64A from the camera 20D that depicts area 28C prior to correction or perspective transformation. Although camera 20D is depicted as being at the top of a rear of the trailer 14 in Figure 5, the image in Figure 6C is taken with the camera 20D being at a lower position at the rear of the trailer 14 (e.g., at or near a bottom of the rear of the trailer 14).

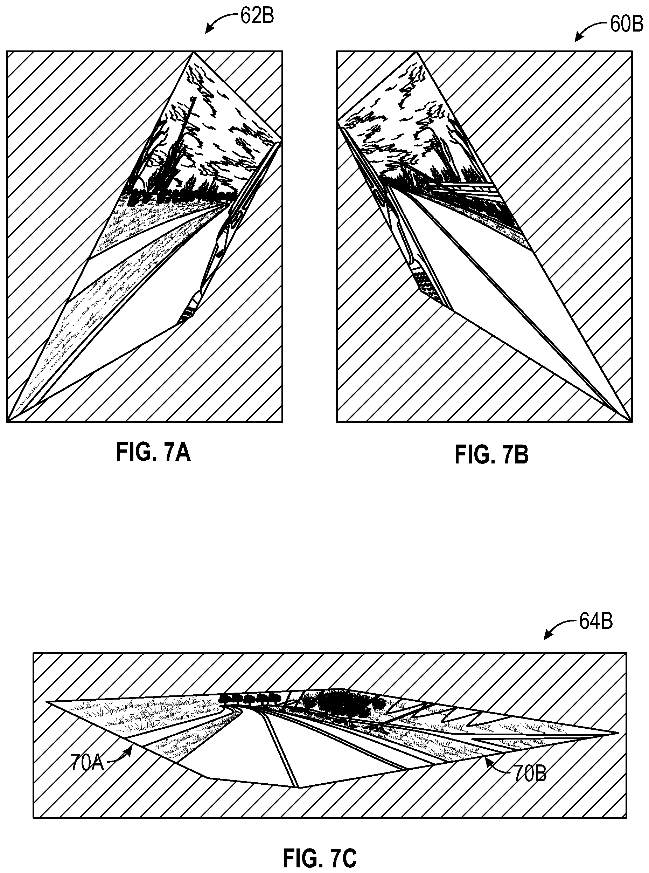

Figure 7A is an example of the second image 62A of Figure 6A after perspective transformation, as image 62B. As shown, the perspective transformation elongates a left side of the image 62A and shortens a right side of the image 62A.

Figure 7B is an example of the first image 60A of Figure 6B after perspective transformation, as image 60B. As shown, the perspective transformation elongates a right side of the image 60A and shortens a left side of the image 60A.

Figure 7C is an example of the third image 64A of Figure 6C after perspective transformation, as image 64B.

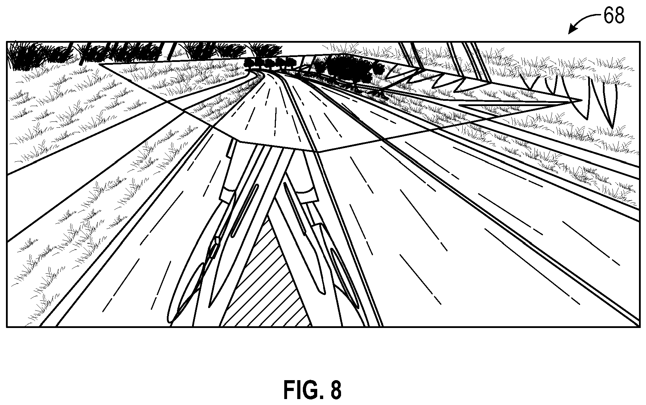

Figure 8 shows an example combined image 68 that is a stitched combination of the images of Figures 7A-C, in which the third image 64B is disposed between the first image 60A and second image 62A, and in which the first area 28A, second area 28B, and rear area 28C are each depicted to provide a panoramic view of the areas 28A-C.

Referring again to Figure 6C and 7C, the third image 64A includes a left portion 66A along a left side of the third image 64, and includes a right portion 66B along a right side of the third image 64. After perspective transformation, these are adapted to a lower left edge 70A and a lower right edge 70B, respectively, of the image 64B. In the example of Figure 8, the image stitching is performed such that in the combined image 68, the left portion 66A of the third image 64A is stitched to a middle area 65A of the second image 62A, and the right portion 66B of the third image 64A is stitched to a middle area 65B of the first image 60A. As used herein, "middle area" means image data that spaced apart by at least 25% from each edge of the original images 60A, 62A. Using the image 62A as an example, with the image 62A having a width W1 and a length L1, the "middle area" is at spaced apart from the left and right sides of the image 62A by a distance of at least .25 of W1, and is spaced apart from the top and bottom sides of the image 62A by a distance of at least .25 of L1. Using the image 60A as an example, with the image 60A having a width W2 and a length L2, the "middle area" is at spaced apart from the left and right sides of the image 60A by a distance of at least .25 of W2, and is spaced apart from the top and bottom sides of the image 60A by a distance of at least .25 of L2.

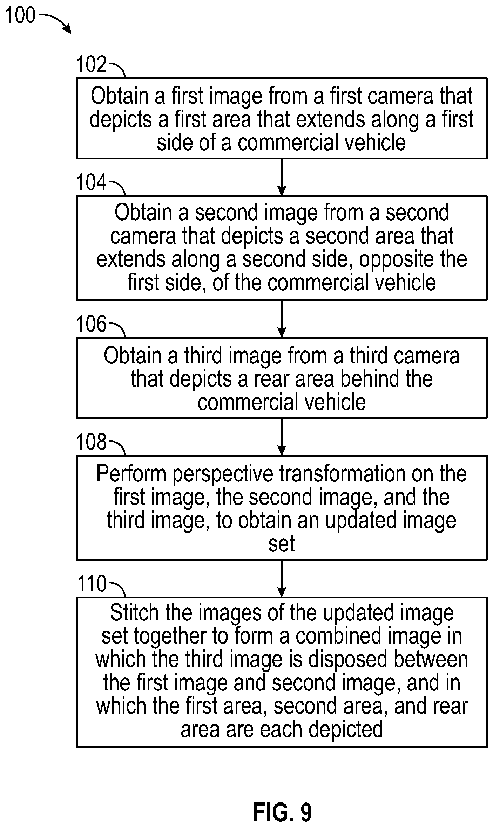

Figure 9 is a flowchart of an example method 100 for a CMS. A first image 60A is obtained from a first camera 20A that depicts a first area 28A that extends along a first side 27A of the commercial vehicle 10 (step 102).

A second image 62A is obtained from a second camera 20B that depicts a second area 28B that extends along a second side 27B, opposite the first side 27A, of the commercial vehicle 10 (step 104).

A third image 64A is obtained from a third camera 20D (or possibly 20E) that depicts a rear area 28C behind the commercial vehicle 10 (step 106), where a field of view FOV_{EX3} of the third camera overlaps a field of view FOV_{EX1} of the first camera 20A and a field of view FOV_{EX2} of the second camera 20B.

A perspective transformation is performed on the first image 60A, the second image 62A, and the third image 64A to obtain an updated image set (step 108), such that each of the first image 60A, second image 62A, and third image 64A are updated in the updated image set.

The updated images 60B, 62B, 64B of the updated image set are stitched together to form a combined image 68 in which the third image 64B is disposed between the first image 60B and second image 62B, and in which the first area 28A, second area 28B, and rear area 28C are each depicted (step 110).

In one or more embodiments, prior to performing the perspective transformations of step 108, at least one of the following is performed: distortion correction for the first image 60A from the first camera 20A to mitigate image distortion caused by a lens or sensor of the first camera 20A, distortion correction for the second image 62A from the second camera 20B to mitigate image distortion caused by a lens or sensor of the second camera 20B, and distortion correction for the third image 64A from the third camera 20D to mitigate image distortion caused by a lens or sensor of the third camera 20D. In one or more embodiments, each of these distortion corrections is performed. However, it is understood that these are non-limiting examples, and that it would be possible to omit distortion correction for one or more of the images 60A, 62A, 64A.

In one or more embodiments, prior to the image stitching of step 110, at least one of the first image 60A, second image 62A, and third image 64A are cropped.

In one or more embodiments, the stitching of step 110 includes performing a first mapping of a first plurality of points of the third image 64 in the updated image set (e.g., along a lower left edge 70A of the updated third image 64B) to the second image 62 in the updated image set, performing a second mapping of a second plurality of points of the third image in the updated image set (e.g., along a lower right edge 70B of the updated third image 64B) to the first image 60 in the updated image set. The stitching includes, based on the first mapping and second mapping, aligning and blending the first image 60, second image 62, and third image 64 in the updated image set to obtain the combined image.

As discussed, above, the first camera 20A, second camera 20B, and third camera 20D have respective optical axes that intersect ground plane G at respective optical angles, and in one or more embodiments, the optical angle of the third camera 20D is less than 90° and is greater than the respective optical angles of the first camera 20A and the second camera 20B.

The combined image 68 is displayed on an electronic display in the commercial vehicle 10, such as the display 18C, 18D, or 18E (which are each between the displays 18A, 18B). At the same time, images from camera 20A may continue being displayed on display 18A, and images from camera 20B may continue being displayed on display 18B.

Although example embodiments have been disclosed, a worker of ordinary skill in this art would recognize that certain modifications would come within the scope of the claims. For that reason, the following claims should be studied to determine their true scope and content.

## Claims

1. A method for a camera monitor system (CMS), comprising:
obtaining a first image from a first camera that depicts a first area that extends along a first side of a commercial vehicle;
obtaining a second image from a second camera that depicts a second area that extends along a second side, opposite the first side, of the commercial vehicle;
obtaining a third image from a third camera that depicts a rear area behind the commercial vehicle;
performing a perspective transformation on the first image, the second image, and the third image to obtain an updated image set, such that each of the first image, second image, and third image are updated in the updated image set; and
stitching the images of the updated image set together to form a combined image in which the third image is disposed between the first image and second image, and in which the first area, second area, and rear area are each depicted.

2. The method of claim 1, wherein a field of view of the third camera overlaps a field of view of the first camera and a field of view of the second camera,
the method optionally comprising, prior to said stitching, cropping at least one of the first image, the second image, and the third image.

3. The method of either preceding claim, wherein:
the third image includes a left portion that extends along a left edge of the third image and a right portion that extends along a right edge of the third image; and
the stitching is performed such that in the combined image, the left portion of the third image is stitched to a middle portion of the second image, and the right portion of the third image is stitched to a middle portion of the first image.

4. The method of any preceding claim, wherein:
the first camera, second camera, and third camera have respective optical axes that intersect a ground plane at respective optical angles; and
the optical angle of the third camera is less than 90° and is greater than the respective optical angles of the first camera and the second camera,
optionally wherein:
the first camera is mounted to a cab of the commercial vehicle on the first side;
the second camera is mounted to the cab on the second side of the commercial vehicle; and
the third camera is mounted to a trailer of the commercial vehicle.

5. The method of any preceding claim, wherein:
the first camera, the second camera, and the third camera have respective focal lengths; and
the focal length of the third camera is less than the respective focal lengths of the first camera and the second camera.

6. The method of any preceding claim, comprising prior to said performing the perspective transformation, performing at least one of:
distortion correction for the first image from the first camera to mitigate image distortion caused by a lens or sensor of the first camera;
distortion correction for the second image from the second camera to mitigate image distortion caused by a lens or sensor of the second camera; and
distortion correction for the third image from the third camera to mitigate image distortion caused by a lens or sensor of the third camera.

7. The method of any preceding claim, wherein said stitching the images of the updated image set together to form a combined image comprises:
performing a first mapping of a first plurality of points of the third image in the updated image set to the first image in the updated image set;
performing a second mapping of a second plurality of points of the third image in the updated image set to the second image in the updated image set; and
based on the first mapping and second mapping:
aligning the first image, second image, and third image in the updated image set; and
blending the first image in the updated image set, the second image in the updated image set, and the third image in the updated image set to obtain the combined image.

8. The method of any preceding claim, comprising:
displaying the first image on a first electronic display in the commercial vehicle;
displaying the second image on a second electronic display in the commercial vehicle; and
displaying the combined image on a third electronic display in the commercial vehicle that is disposed between the first electronic display and the second electronic display.

9. A camera monitor system (CMS), comprising:
a first camera, a second camera, and a third camera mounted to different locations of a commercial vehicle; and
processing circuitry operatively connected to memory and configured to:
obtain a first image from the first camera that depicts a first area that extends along a first side of the commercial vehicle;
obtain a second image from the second camera that depicts a second area that extends along a second side, opposite the first side, of the commercial vehicle;
obtain a third image from the third camera that depicts a rear area behind the commercial vehicle;
perform a perspective transformation on the first image, the second image, and the third image to obtain an updated image set, such that each of the first image, second image, and third image are updated in the updated image set; and
stitch the images of the updated image set together to form a combined image in which the third image is disposed between the first and second images, and in which the first area, second area, and rear area are each depicted.

10. The CMS of claim 9, wherein a field of view of the third camera overlaps a field of view of the first camera and a field of view of the second camera,
optionally wherein the processing circuitry is configured to, prior to the stitching, crop at least one of the first image, the second image, and the third image.

11. The CMS of either of claims 9 and 10, wherein:
the third image includes a left portion that extends along a left edge of the third image and a right portion that extends along a right edge of the third image; and
in the combined image, the left portion of the third image is stitched to a middle portion of the second image, and the right portion of the third image is stitched to a middle portion of the first image.

12. The CMS of any one of claims 9 to 11, wherein:
the first camera, second camera, and third camera have respective optical axes that intersect a ground plane at respective optical angles; and
the optical angle of the third camera is less than 90° and is greater than the respective optical angles of the first camera and the second camera,
optionally wherein:
the first camera and second camera are mounted to a cab of the commercial vehicle; and
the third camera is mounted to a trailer of the commercial vehicle.

13. The CMS of any one of claims 9 to 12, wherein:
the first camera, the second camera, and the third camera have respective focal lengths; and
the focal length of the third camera is less than the respective focal lengths of the first camera and the second camera.

14. The CMS of any one of claims 9 to 13, wherein the processing circuitry is configured to, prior to performance of the perspective transformation, perform at least one of:
distortion correction for the first image from the first camera to mitigate image distortion caused by a lens or sensor of the first camera;
distortion correction for the second image from the second camera to mitigate image distortion caused by a lens or sensor of the second camera; and
distortion correction for the third image from the third camera to mitigate image distortion caused by a lens or sensor of the third camera.

15. The CMS of any one of claims 9 to 14, wherein to stitch the images of the updated image set, the processing circuitry is configured to:
perform a first mapping of a first plurality of points of the third image in the updated image set to the first image in the updated image set;
perform a second mapping of a second plurality of points of the third image in the updated image set to the second image in the updated image set; and
based on the first mapping and second mapping:
align the first image, second image, and third image in the updated image set; and
blend the first, second, and third images in the updated image set to obtain the combined image,
optionally wherein the processing circuitry is configured to:
display the first image on a first electronic display in the commercial vehicle;
display the second image on a second electronic display in the commercial vehicle; and
display the combined image on a third electronic display in the commercial vehicle that is disposed between the first electronic display and the second electronic display.
